# EUROPEAN PATENT APPLICATION

(11) **EP 2 495 602 A1**
(43) Date of publication of application: **05.09.2012**
(21) Application number: 11305219.5
(22) Date of filing: 01.03.2011
(51) Int. Cl.: G02B 27/22, H04N 13/00

(54) **Autostereoscopic display and method for operating the same**

(71) Applicant: Thomson Licensing, 92130 Issy-les-Moulineaux (FR)
(72) Inventor: Winter, Marco, 30659 Hannover (DE)
(74) Representative: Schmidt-Uhlig, Thomas

(57) **Abstract**

An autostereoscopic display, comprising a display panel, a parallax barrier that is arranged on a viewing side of the display panel, wherein the parallax barrier comprises a first e-ink plane having a plurality of e-ink particles that are pivotable around a tilt axis by a tilting angle and wherein the e-ink particles are light-transmissive in a first direction and opaque in a second direction, and a control unit that is configured to tilt the e-ink particles so as to set the e-ink particles to a common tilting angle and to synchronize a reproduction of a picture by the display panel and the tilt of the e-ink particles so as to provide a stereoscopic view to a user.

## Description

### FIELD OF THE INVENTION

The invention relates to an autostereoscopic display comprising a display panel and a parallax barrier and further to a method of operating the same.

### BACKGROUND

Stereoscopic display of 3D pictures or 3D movies has the need to present different images to the left and right eye of a viewer. A straightforward solution, which today is used in most 3D cinemas, are polarizing glasses and a polarized projection of the stereoscopic pair of images. However, the necessity of wearing glasses when watching a movie for many customers means having an uncomfortable viewing experience. Especially for home entertainment there is a need for stereoscopic displays that provide a stereoscopic view to a viewer without having the necessity of wearing any auxiliary means like shutter or polarizing glasses, for example. Usually stereoscopic 3D displays that do not need auxiliary means use a parallax barrier to provide different images to the viewer's left and right eye. This barrier is usually rigid. Therefore, the viewer has to keep a predefined horizontal position to provide the left eye with a different view than the right eye. A plurality of different views may be provided to a plurality of spectators. However, if one eye of the user is at the border from one view to the neighboring view, annoying artifacts lead to an unpleasant user experience. Furthermore, since the parallax barrier is rigid, the display panel needs to provide separate pixels for each view. This means that the more views are supported by a respective 3D display device, e.g. a flat screen, the less is the pixel resolution per view. Alternative technologies like lenticular lens systems have comparable problems.

Exemplarily, 3D displays using a parallax barrier are disclosed in JP 09-230286, in which gratings are used as a parallax barrier. In order to adapt the stereoscopic display to the viewer's position in front of the screen, a head tracking system is provided for adjustment of the parallax barrier. The barrier is adjusted such that the gratings are perpendicular to a line connecting the eyes of a viewer. A further 3D display using a parallax barrier is known from JP 2005-157033. In this document the parallax barrier is horizontally vibrated and the left and right images are alternatively displayed to a viewer.

### SUMMARY

It is an object of the present invention to provide an autostereoscopic display and a method for operating the same providing a high number of supported different views to the display while improving a pixel resolution per view.

In an aspect of the invention, an autostereoscopic display comprises a display panel and a parallax barrier that is arranged on the viewing side of the display panel, wherein the parallax barrier comprises a first e-ink plane having a plurality of e-ink particles, which are pivotable around a tilt axis by a tilting angle and which are light-transmissive in a first direction and opaque in a second direction. Preferably, the e-ink particles are opaque in all directions orthogonal to the tilt axis except for the first direction. In this way the e-ink particles transmit light only in a single direction orthogonal to the tilt axis. The autostereoscopic display further comprises a control unit that is configured to tilt the e-ink particles so as to set the e-ink particles to a common tilting angle and to further synchronize a reproduction of a picture by the display panel and the tilt of the e-ink particles so as to provide a stereoscopic view to a user. Advantageously, all e-ink particles of the e-ink plane rotate in synchronism. Therefore, at each moment there is only one possible viewing direction relative to the panel. This viewing direction, however, preferably rotates horizontally. Using a fast display panel different images are reproduced during this rotation in order to provide different views to the left eye and the right eye of a user or even to different users. The number of possible views is only limited by the frequency of the display panel. Advantageously, the pixel resolution of each view is identical to the pixel resolution of the display panel and is independent of the number of supported views. At the same time an arbitrary number of views may be provided.

Different views are advantageously provided to different viewers, e.g. a plurality of spectators watching a movie. Each of them will enjoy the full quality with respect to resolution and depth that may be provided by the display device. In conventional systems known in the prior art the stereoscopic reproduction of a 3D scene is perfect for a single optimal place in front of the screen or display only. For spectators sitting at different places the quality of the 3D reproduction decreases with increasing distance from the aforementioned optimal place. The 3D scene may be distorted or the visual depth may be reduced. This drawback is overcome by the proposed solution.

Further, the different views are favorably assigned different perspectives of one and the same object, comparable to a holographic view to the object. According to this aspect, the spectator is provided a picture having a full pixel as well as a full depth resolution.

According to another advantageous aspect of the invention, the autostereoscopic display further comprises a second e-ink plane comprising a plurality of e-ink particles that are pivotable around a tilt axis by a tilt angle, wherein the e-ink particles are light-transmissive in a first direction and opaque in a second direction, and wherein the e-ink particles of the second e-ink plane have a tilt axis that is different from the tilt axis of the e-ink particles of the first e-ink plane. Again, the e-ink particles preferably are opaque in all directions orthogonal to the tilt axis except for the first direction. The first e-ink plane allows to provide different views in a first rotating plane, e.g. horizontally. The second e-ink plane allows to provide further views in another plane different from the first plane. Preferably, the second plane is aligned vertically. Additional views, e.g. for users tilting the head, i.e. a connection line between the eyes, e.g. due to a different viewing position are supported.

Advantageously, the tilt axes of the e-ink particles within one and the same e-ink plane are parallel to each other. A common alignment of all e-ink particles within one e-ink plane is advantageous with respect to the production of the respective parallax barrier. On the other hand, slightly tilted axes of rotation of the respective e-ink particles especially in peripheral areas of the parallax barrier may provide an improved focusing of the screen to the user's face. In other words, the perception by the user is a point, namely the eye and not a line or slit as it is provided by e-ink particles having a tilting axis that is aligned in a common direction.

According to another advantageous embodiment, the tilt axes of the e-ink particles of the first plane are aligned vertically and the tilt axes of the e-ink particles of the second e-ink plane are aligned horizontally.

In another advantageous aspect of the invention, the e-ink particles are spheres comprising light-transmissive half spheres and an opaque layer between the half spheres. According to another embodiment of the invention, the e-ink particles are elongated in a direction parallel to the tilt axis. Preferably, the particles have approximately the shape of a prolate ellipsoid, wherein a polar axis of the prolate ellipsoid is greater than its equatorial diameter.

The e-ink particles are preferably oppositely charged on opposite sides and are pivotable by applying an electric field. A magnetic moment is, however, likewise suitable for inducing the respective tilting of the particles. In this case the sphere-like e-ink particle has a net magnetic moment, which preferably is perpendicular to the tilt axis. This is achieved by half spheres carrying magnetic material, wherein the particles are magnetized selectively. A tilt of the particles is in both of the aforementioned cases induced by applying an electric and/or a magnetic field.

E-ink particles having a sphere- or ellipsoid-like shape provide a high switching frequency due to low frictional losses inside the liquid-filled chamber constituting an e-ink cell. Switching of the e-ink particles by applying an electric field provides a simple and fast solution for the design of control electronics of the respective e-ink cells.

According to another advantageous embodiment of the invention, the autostereoscopic display comprises a head tracker for tracking a position and/or an orientation of the head of a user, wherein the control unit is further configured to adjust the tilting angle of the e-ink particles and the synchronized reproduction of the pictures of the display panel to the determined position of the user's head. Preferably, the head tracker is also suitable for tracking the head of more than one person. A head tracker allows to adjust the projection spots for the first and second stereoscopic image to the actual position of the head of the viewer. Accordingly, a better viewing experience is provided.

According to another advantageous embodiment, the first and/or second e-ink plane comprises a first and a second interleaved sub-layer. According to an aspect, further sub-layers, e.g. a third or fourth sub-layer are provided. The number of sub-layers is a tradeoff between a reduction of the luminance of the display vs. the avoidance of residual images. The interleaved structure improves the brightness of the projection due to the following considerations. There is a necessity for a construction space for the electrodes of the e-ink cells. Accordingly, there are lateral gaps between the single e-ink cells. These inevitable gaps allow a slight portion of light that is produced by the display panel to travel through these respective gaps. This diffused light might lower the brightness and contrast of the display. Accordingly, an interleaved layer is placed in front of the first sub-layer and light traveling through the gaps in the first sub-layer is focused to the viewing spots by the second interleaved sub-layer. As a result, the brightness and contrast of the screen is improved, the viewing experience is more satisfying.

In another aspect of the invention, a method for operating an autostereoscopic display according to one of the aforementioned aspects is provided. The method comprises the steps of tilting the e-ink particles by a common tilting angle and synchronizing the tilting of the e-ink particles and the reproduction of the pictures by the display panel so as to provide a stereoscopic view to the user.

Advantageously, the step of synchronizing the tilting of the e-ink particles and the reproduction of a picture by the display panel further comprises displaying a first image of a stereoscopic pair of images at a first tilting angle and displaying a second image of the stereoscopic pair of images at a second tilting angle.

Same or similar advantages already mentioned for the autostereoscopic display according to the invention apply to the method for operating an autostereoscopic display.

### BRIEF DESCRIPTION OF DRAWINGS

Further aspects of the invention will ensue from the following description of an embodiment of the invention with reference to the accompanying drawings, wherein
- Fig. 1: is a simplified top view of an autostereoscopic display having a parallax barrier according to an embodiment of the invention, wherein the inset shows an exemplary e-ink cell of the parallax barrier,
- Fig. 2: schematically illustrates the alignment of e-ink particles inside an e-ink cell,
- Fig. 3: shows a simplified view of a first embodiment of an e-ink cell,
- Fig. 4: depicts a simplified view of a second embodiment of an e-ink cell,
- Fig. 5: shows a simplified view of a third embodiment of an e-ink cell,
- Fig. 6: is a simplified top view of an autostereoscopic display comprising a parallax barrier and an interleaved parallax barrier according to an embodiment of the invention, and
- Fig. 7: is a simplified top view of interleaved e-ink cells according to a further embodiment of the invention.

### DETAILED DESCRIPTION OF AN EXEMPLARY EMBODIMENT

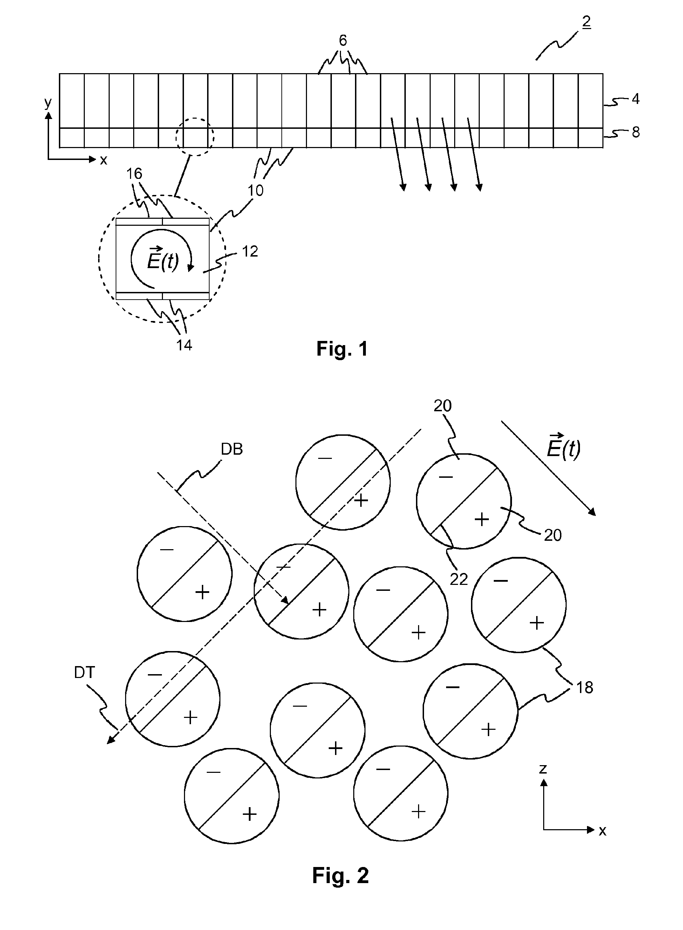

Fig. 1 is a simplified top view of an autostereoscopic display 2 comprising a display panel 4 having a plurality of pixels 6 and a parallax barrier 8 comprising a plurality of e-ink cells 10. The internal space 12 of each e-ink cells 10 is filled with e-ink particles that allow a selective transmission of light that is generated by the display panel 4, i.e. generated by a respective pixel 6 of the display panel 4. The e-ink particles are selectively transmissive in that a direction of the emitted light, which is exemplarily illustrated by arrows for four pixels 6 of the display panel 4, may be adjusted. A tilting angle of the e-ink particles shall be zero if the light of the display panel 4 is blocked completely. At a tilting angle of 90° the light is transmitted in a direction that is perpendicular to the light emitting surface of the display panel 4. The tilt angle of the e-ink particles that are located in the internal space 12 of the e-ink cell 10 is adjusted by applying an electric field *E̅(t)* to the e-ink particles causing the e-ink particles to rotate about their axis of rotation as it is indicated by the turning arrow in the interior space 12 of the e-ink cell 10. The time dependent electric field *E̅(t)* is generated by suitable front electrodes 14 and rear electrodes 16 that are controlled by a suitable control unit (not shown). Since the electrodes 14, 16 need to be transparent for the light that is generated by the pixels 6 of the display panel 4 a suitable transparent material like indium tin oxide (ITO) is selected. In the present example, since a vector of the electric field *E̅(t)* is in the paper plane, an axis of rotation for the e-ink particles is perpendicular thereto.

Fig. 2 shows a simplified detailed view to a plurality of e-ink particles 18 typically located in the internal space 12 of the e-ink cell 10. The direction of the applied electric field *E̅(t)* is exemplarily indicated by the respective arrow. The e-ink particles 18 consist of small spheres or balls, wherein each sphere or ball consists of two transparent half spheres 20. The boundary surface or intermediate layer between the two half spheres 20, 22 is a preferably black, non-reflective plane. One half sphere 20 has a positive electric charge indicated by "+", while the other half sphere 20 has a negative electric charge "-". Accordingly, the e-ink particles 18 are aligned by the applied electric field *E̅(t)* and there is a preferred direction of light transmission DT, which is rotatable and adjustable by the respective electric field *E̅(t)*. In a direction perpendicular to the light-transmissive direction DT, i.e. the light block direction DB, the e-ink particles 18 block the light completely. The plurality of e-ink particles 18 does not only block the light in the direction DB, but also in directions that are significantly different from the direction of light transmission DT. Accordingly, a direction-selective light barrier is provided by the parallax barrier 8, wherein an angle range of the light beam that is transmitted by the parallax barrier 8 is defined by the thickness of the parallax barrier 8 in a direction of light transmission and a number of e-ink particles 18 that are located in the interior space 12 of a respective e-ink cell 10.

The e-ink cells 10 that form the e-ink plane 8 are arranged in small stripes in front of the display panel 4 and are preferably addressed by an electric moving voltage generating the electric field *E̅(t)*. The e-ink particles 12 of the respective e-ink cells 10 of the e-ink plane 8 are rotated by the applied electric field *E̅(t)* in a synchronized way. Therefore, at each moment "t" there is only one view to the display panel 4. This view moving horizontally in accordance with the rotation of the e-ink particles 18. As the autostereoscopic display 2 produces different pixels, i.e. different pictures by the display panel 4, different views are provided during the rotation of the e-ink particles 18 in the e-ink cells 10. The advantage of the display panel 4 is that an arbitrary number of views may be provided to a respective number of viewers without losing display resolution. Preferably, the synchronized display of pictures or images by the display panel 4 (that is synchronized with the rotation of the e-ink particles 18 in the e-ink cells 10) may be improved by applying a head tracking system that determines the position and/or the tilt angle of a viewer's head. Consequently, the synchronization between the tilting of the e-ink particles 18 and the reproduction of the pictures by the display panel 4 may be adjusted so as to focus the stereoscopic images to the user's eyes.

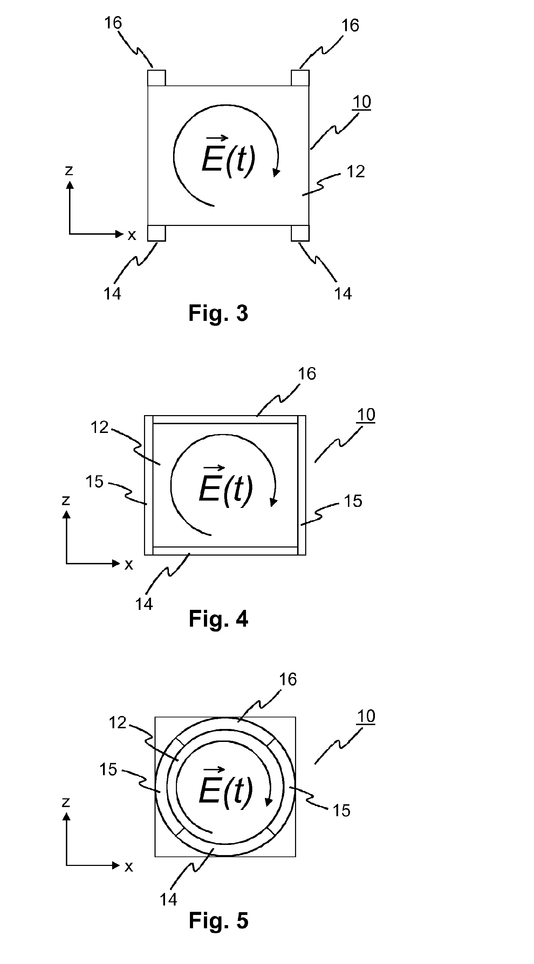

Figs. 3 to 5 show simplified top views of alternative designs of e-ink cells 10 according to further embodiments of the invention. According to Fig. 3, the front electrodes 14 and the rear electrodes 16 are reduced to small stripes that are located at the respective corners of the e-ink cell 10. In this way less material is used for the respective electrodes 14, 16 and their transparent characteristic is less important. According to Fig. 4, a front electrode 14, a rear electrode 16 and two side electrodes 15 are placed around the interior chamber 12 of the e-ink cell 10, in order to generate a suitable electric field *E̅(t)*. An electrically conducting plane may be placed between neighboring electrodes to avoid the induction of undesired electrical fields into the neighboring e-ink cell. According to another embodiment, shown in Fig. 5, a cylindrical shape is used for the e-ink cell 10. This specific shape of the e-ink electrodes, i.e. the cylinder segments providing the front electrode 14, the rear electrode 16 and the side electrodes 15 surrounding the interior chamber 12 simplifies the arrangement of the electrodes inside the parallax barrier 8. The rotation of the e-ink particles 18 is improved.

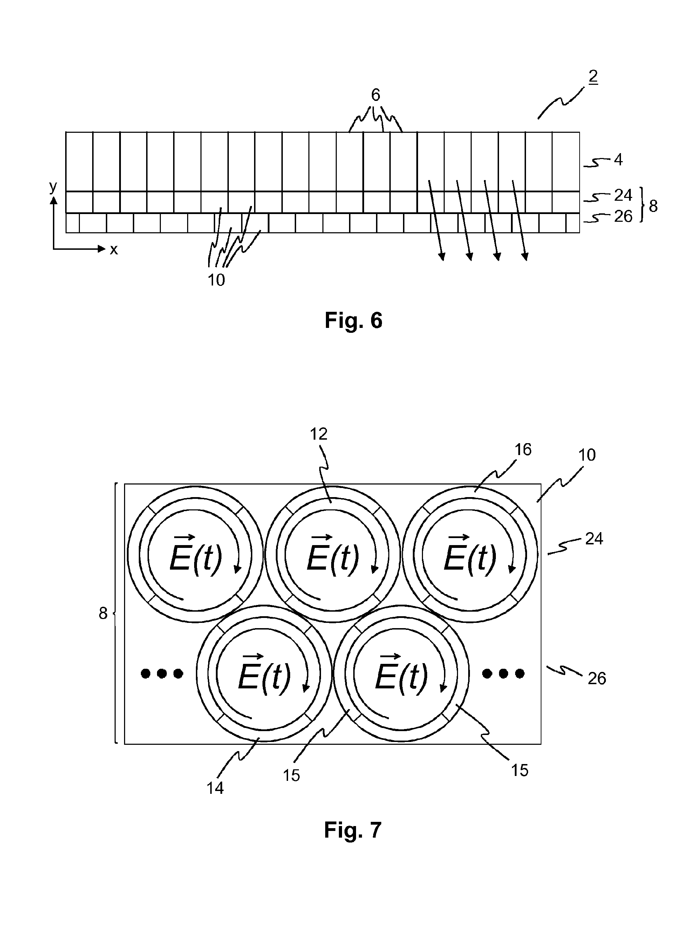

Fig. 6 is a further simplified top view to an autostereoscopic display 2 according to another embodiment of the invention. The display 2 comprises a display panel 4 having a plurality of pixels 6 and a parallax barrier 8 comprising a first and a second sub-layer 24, 26, which are interleaved with each other by half a size of the lateral width of a respective e-ink cell 10. Advantageously, light emitted by the respective pixel 6 of the display panel 4 (as indicated by the three arrows) is transmitted through the e-ink cell 10 of the first sub-layer 24 as well as through the e-ink cell 10 of the second sub-layer 26. Some scattered light might be passing through the first sub-layer 24 in a lateral region between or at the border of two adjacent e-ink cells 10. This border zone comprises the electrodes for generation of the electric field *E̅(t)* as it is clear from the exemplary e-ink cells 10 of the embodiments shown in Figs. 3 to 5. Accordingly, light passing the first sub-layer 24 of the e-ink plane in this region is not blocked by the e-ink particles of the respective sub-layer 24. These scattered light portions may lower the brightness and contrast of the stereoscopic pictures, frames or movies that are presented to a respective viewer and accordingly lead to an unpleasant viewing experience. By placing a second interleaved sub-layer (i.e. the second sub-layer 26) in front of the first sub-layer 24, the light traveling through the border regions between the e-ink cells 10 of the first sub-layer 24 is blocked by the e-ink cells 10 of the second interleaved sub-layer 26.

Fig. 7 shows a detailed view to the parallax barrier 8 comprising a first and second sub-layer 24, 26 wherein the cylindrical e-ink cells 10 are arranged in an interleaved way.

According to another embodiment, a first and a second e-ink plane 8 are placed in front of the display panel 4, wherein the tilting angle of the e-ink particles 18 of the first e-ink plane is preferably perpendicular to the tilting axis of the e-ink particles 18 in the second e-ink plane. Advantageously, the first e-ink plane has a tilting axis that is vertical and allows a horizontal distribution of the light, while the tilting axis of the second e-ink plane is arranged horizontally and thereby provides a variation of the transmission angle in a vertical plane. By synchronizing the first and second e-ink plane, a plurality of different views in a horizontal plane, i.e. for spectators sitting beside each other as well as a plurality of different views in a vertical plane, providing a stereoscopic view to e.g. a person that is tilting his or her head due to a relaxed lying viewing position, may be provided.

According to further advantageous embodiments of the invention, the tilting axes of the e-ink particles inside one e-ink plane are (apart from technically undesired deviations) parallel to each other. In other words, the e-ink particles 18 of a parallax barrier are rotating around a same axis of rotation. This may be achieved by the geometrical arrangement of the front, rear and side electrodes 14, 16, 15 defining the shape of the electric field *E̅(t)* that in turn generates the rotation of the e-ink particles 18 inside the e-ink cell 10. However, since the focus point for projection of a stereoscopic image are the user's eyes, the tilting angles, especially in the peripheral regions of the display panel 4, may slightly deviate from the tilting angle in the center of the screen. The user's viewing experience may be optimized.

Although the invention has been described hereinabove with reference to a specific embodiment, it is not limited to this embodiment and no doubt further alternatives will occur to the skilled person that lie within the scope of the invention as claimed.

## Claims

1. An autostereoscopic display, **comprising:**
a) a display panel,
b) a parallax barrier that is arranged on a viewing side of the display panel, wherein the parallax barrier comprises a first e-ink plane having a plurality of e-ink particles that are pivotable around a tilt axis by a tilting angle and wherein the e-ink particles are light-transmissive in a first direction and opaque in a second direction, and
c) a control unit that is configured to tilt the e-ink particles so as to set the e-ink particles to a common tilting angle and to synchronize a reproduction of a picture by the display panel and the tilt of the e-ink particles so as to provide a stereoscopic view to a user.

2. The autostereoscopic display according to claim 1, **further** comprising a second e-ink plane comprising a plurality of e-ink particles that are pivotable around a tilt axis by a tilting angle, wherein the e-ink particles are light-transmissive in a first direction and opaque in a second direction and wherein the e-ink particles of the second e-ink plane have a tilt axis that is different from the tilt axis of the e-ink particles of the first e-ink plane.

3. The autostereoscopic display according to claim 1 or 2,
**wherein** the tilt axes off the e-ink particles within one and the same e-ink plane are parallel to each other.

4. The autostereoscopic display according to one of claims 1 to 3, **wherein** the tilt axes of e-ink particles of the first e-ink plane are aligned vertically and the tilt axes of the e-ink particles of the second e-ink plane are aligned horizontally.

5. The autostereoscopic display according to one of claims 1 to 4, **wherein** the e-ink particles are spheres having light-transmissive half spheres and an opaque boundary surface between the half spheres.

6. The autostereoscopic display according to one of claims 1 to 5, **wherein** the e-ink particles are oppositely charged on opposite sides and are pivotable by applying an electric field.

7. The autostereoscopic display according to one of claims 1 to 6, **further** comprising a head tracker for tracking a position and/or an orientation of a head of a user, wherein the control unit is further configured to adjust the tilting angle of the e-ink particles and the synchronized reproduction of the pictures of the display panel to a determined position of the user's head.

8. The autostereoscopic display according to one of claims 1 to 7, **wherein** the first and/or second e-ink plane comprises a first and a second interleaved sub-layer.

9. A Method for operating an autostereoscopic display according to one of the preceding claims, the method **comprising** the steps of:
a) tilting the e-ink particles by the common tilting angle; and
b) synchronizing the tilting of the e-ink particles and the reproduction of a picture by the display panel so as to provide a stereoscopic view to a user.

10. The Method according to claim 9, **wherein** the step of synchronizing the tilting of the e-ink particles and the reproduction of a picture by the display panel further comprises:
a) displaying a first image of a stereoscopic pair of images at a first tilting angle; and
b) displaying a second image of the stereoscopic pair of images at a second tilting angle.
